(19) **Europäisches Patentamt / European Patent Office / Office européen des brevets**

(11) **EP 3 035 073 B1**

(12) **FASCICULE DE BREVET EUROPEEN**

(45) Date de publication et mention
de la délivrance du brevet:
**18.12.2019 Bulletin 2019/51**

(51) Int Cl.:
***G01S 5/02*** (2010.01)

(21) Numéro de dépôt: **15201696.0**

(22) Date de dépôt: **21.12.2015**

(54) **PROCÉDÉ D'IDENTIFICATION DE POSITIONS D'OBJETS DANS UN ENVIRONNEMENT**

VERFAHREN ZUR IDENTIFIZIERUNG DER POSITION VON OBJEKTEN IN EINER UMGEBUNG

METHOD FOR IDENTIFYING POSITIONS OF OBJECTS IN AN ENVIRONMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.12.2014 FR 1462981**

(43) Date de publication de la demande:
**22.06.2016 Bulletin 2016/25**

(73) Titulaire: **Commissariat à l'Energie Atomique et
aux Energies
Alternatives
75015 Paris (FR)**

(72) Inventeur: **De Rivaz, Sébastien
73800 Villard-d'Hery (FR)**

(74) Mandataire: **Talbot, Alexandre et al
Cabinet Hecké
28 Cours Jean Jaurès
38000 Grenoble (FR)**

(56) Documents cités:
**EP-A1- 2 138 861          US-A1- 2007 010 956
US-A1- 2013 172 020**

• SHEHADI DAYEKH ET AL: "Smart
spatio-temporal fingerprinting for cooperative
ANN-based wireless localization in underground
narrow-vein mines", PROCEEDINGS OF THE 4TH
INTERNATIONAL SYMPOSIUM ON APPLIED
SCIENCES IN BIOMEDICAL AND
COMMUNICATION TECHNOLOGIES, ISABEL '11,
1 janvier 2011 (2011-01-01), pages 1-5,
XP055218605, New York, New York, USA DOI:
10.1145/2093698.2093870 ISBN:
978-1-4503-0913-4

Printed by Jouve, 75001 PARIS (FR)

**Description**

**Domaine technique**

La présente invention a trait à un procédé d'identification de positions d'objets dans un environnement, en particulier un environnement industriel.

A titre d'exemples non limitatifs, les objets peuvent être des points d'assemblage tels que des vis, des rivets, des points de soudure.

Dans le cadre d'une surveillance d'un procédé industriel, il peut être opportun de vérifier qu'un point d'assemblage n'a pas été oublié, ou encore qu'un point d'assemblage courant, c'est-à-dire en cours d'assemblage, est en adéquation avec le point d'assemblage attendu.

**Etat de la technique antérieure**

A cet effet, il est connu de l'état de la technique, notamment du document EP 2 138 861 (ci-après D1), de localiser les objets dans l'environnement.

Pour ce faire, D1 prévoit un système de localisation des objets comportant :

- un outil configuré pour coopérer avec chaque objet de l'ensemble dans une position dite de coopération, l'outil étant équipé d'un émetteur d'un signal de type Ultra Large Bande (ULB),
- une pluralité de récepteurs du signal agencés pour recevoir le signal.

L'émetteur et la pluralité de récepteurs forment des moyens de télémétrie (*Ranging* en langue anglaise) permettant de localiser l'outil dans une position de coopération, et par là-même de localiser l'objet correspondant.

Par « Ultra Large Bande », on entend un signal présentant :

- une largeur de bande absolue mesurée à -10 dB supérieure à 250 MHz, voire supérieure à 500 MHz si l'on considère la définition américaine de l'ULB, ou
- une largeur de bande relative mesurée à -10 dB supérieure à 20% de la fréquence centrale.

Les signaux de type ULB conviennent tout particulièrement à un environnement industriel dans la mesure où ces signaux sont peu confrontés aux problèmes de multi-trajets.

Le système de localisation de D1 n'est pas entièrement satisfaisant dans la mesure où il nécessite un nombre minimal de récepteurs pour utiliser la technique de télémétrie (*Ranging* en langue anglaise) dite des différences de temps d'arrivée, TDOA pour *Time Difference of Arrivai* en langue anglaise, cf §0042. Ce nombre minimal de récepteurs est de 3, en raison d'un calcul de triangulation. En outre, la précision du système de localisation de D1 peut être fortement réduite par des biais de mesure introduits par l'environnement, cf §0045. Il peut en résulter une précision insuffisante pour certaines applications.

Le document US 2007/0010956 décrit un procédé de prédication de la position d'un transmetteur dans une zone d'intérêt avec un récepteur fixe qui reçoit un signal depuis le transmetteur mobile. Le récepteur dérive une empreinte à partir du signal reçu et un réseau de neurones prédit la position du transmetteur à partir de l'empreinte. Le procédé comporte l'acquisition de données d'entrainement représentatives de l'empreinte dans des positions connues.

**Exposé de l'invention**

La présente invention vise à remédier en tout ou partie aux inconvénients précités, et concerne à cet effet un procédé d'identification de la position d'un ensemble de K objets dans un environnement, K étant un entier naturel supérieur ou égal à 2, le procédé comportant les étapes :

a) prévoir un outil configuré pour coopérer avec chaque objet de l'ensemble dans une position dite de coopération, l'outil étant équipé d'un émetteur d'un signal de type Ultra Large Bande,

b) agencer au moins un récepteur dans l'environnement pour recevoir ledit signal pour chacune des K positions de coopération, le ou chaque récepteur étant configuré pour fournir une donnée représentative de la position de coopération correspondante, ladite donnée formant une variable aléatoire, notée X,

c) acquérir au moins M fois la donnée fournie par le ou chaque récepteur pour chacune des K positions de coopération, où M est un entier naturel supérieur à une valeur prédéterminée,

d) calculer l'espérance de X, notée E[X], pour chacune des K positions de coopération à partir des M données acquises lors de l'étape c),

e) disposer l'outil dans une position de coopération, dite position courante,

f) acquérir au moins une donnée, dite donnée courante, fournie par le ou chaque récepteur pour la position courante,

g) appliquer un critère d'identification comprenant E[X] à partir de la donnée courante de manière à identifier la position courante parmi les K positions de coopération.

La présente invention concerne également un procédé d'identification de la position d'un ensemble de K objets dans un environnement, K étant un entier naturel supérieur ou égal à 2, le procédé comportant les étapes :

a) prévoir un outil configuré pour coopérer avec chaque objet de l'ensemble dans une position dite de coopération, l'outil étant équipé d'un récepteur d'un signal de type Ultra Large Bande,

b) agencer au moins un émetteur dans l'environnement pour émettre ledit signal pour chacune des K positions de coopération, le récepteur de l'outil étant configuré pour fournir une donnée représentative de la position de coopération correspondante, ladite donnée formant une variable aléatoire, notée X,

c) acquérir au moins M fois la donnée fournie par le récepteur pour chacune des K positions de coopération, où M est un entier naturel supérieur à une valeur prédéterminée,

d) calculer l'espérance de X, notée E[X], pour chacune des K positions de coopération à partir des M données acquises lors de l'étape c),

e) disposer l'outil dans une position de coopération, dite position courante,

f) acquérir au moins une donnée, dite donnée courante, fournie par le récepteur pour la position courante,

g) appliquer un critère d'identification comprenant E[X] à partir de la donnée courante de manière à identifier la position courante parmi les K positions de coopération.

La présente invention concerne enfin un procédé d'identification de la position d'un ensemble de K objets dans un environnement, K étant un entier naturel supérieur ou égal à 2, le procédé comportant les étapes :

a) prévoir un outil configuré pour coopérer avec chaque objet de l'ensemble dans une position dite de coopération, l'outil étant équipé d'un émetteur-récepteur d'un signal de type Ultra Large Bande,

b) agencer au moins un émetteur-récepteur dans l'environnement pour émettre et recevoir ledit signal pour chacune des K positions de coopération, l'émetteur-récepteur de l'outil et chaque émetteur-récepteur de l'environnement étant configurés pour fournir une donnée représentative de la position de coopération correspondante, ladite donnée formant une variable aléatoire, notée X,

c) acquérir au moins M fois la donnée fournie par l'émetteur-récepteur de l'outil et chaque émetteur-récepteur de l'environnement pour chacune des K positions de coopération, où M est un entier naturel supérieur à une valeur prédéterminée,

d) calculer l'espérance de X, notée E[X], pour chacune des K positions de coopération à partir des M données acquises lors de l'étape c),

e) disposer l'outil dans une position de coopération, dite position courante,

f) acquérir au moins une donnée, dite donnée courante, fournie par l'émetteur-récepteur de l'outil et chaque émetteur-récepteur de l'environnement pour la position courante,

g) appliquer un critère d'identification comprenant E[X] à partir de la donnée courante de manière à identifier la position courante parmi les K positions de coopération.

Ainsi, de tels procédés selon l'invention permettent de s'affranchir des biais de mesure introduits par l'environnement grâce aux étapes c) et d) qui permettent de définir une signature caractéristique des K positions de coopération. La signature caractéristique des K positions de coopération se manifeste par E[X]. Cette signature caractéristique permet d'identifier les K positions de coopération sans devoir les localiser précisément. Contrairement à D1, de tels procédés selon l'invention ne nécessitent donc pas une localisation précise par télémétrie (*Ranging* en langue anglaise) des K positions de coopération si bien qu'un seul récepteur peut suffire pour identifier les K positions de coopération. Le concept inventif commun entre de tels procédés selon l'invention réside donc dans les étapes c) et d) définissant une signature caractéristique des K positions de coopération.

E[X] forme une base pour quantifier la similitude entre la position courante et les K positions de coopération.

Par « Ultra Large Bande » (ULB), on entend un signal présentant :

- une largeur de bande absolue mesurée à -10 dB supérieure à 250 MHz, voire supérieure à 500 MHz si l'on considère la définition américaine de l'ULB, ou
- une largeur de bande relative mesurée à -10 dB supérieure à 20% de la fréquence centrale.

Le signal de type ULB est de préférence un signal impulsionnel.

Par ailleurs, la valeur pour M est de préférence prédéterminée en fonction du bruit de fond de l'environnement. Avantageusement, M est compris entre 10 et 100.

Selon un mode de mise en œuvre, le signal se propage dans un canal de propagation, et la donnée fournie lors de l'étape b) comporte tout ou partie de la réponse impulsionnelle du canal de propagation correspondant, X étant vectorielle.

Ainsi, les informations intrinsèques contenues dans tout ou partie de la réponse impulsionnelle sont représentatives de la position de coopération correspondante. Ces informations intrinsèques permettent de distinguer deux positions de coopération distinctes et de gagner en précision relativement à une valeur unique de distance. Le fait de n'utiliser qu'une partie de la réponse impulsionnelle permet de réduire les temps de calcul.

Selon une forme d'exécution, la réponse impulsionnelle est à valeurs complexes, et le critère d'identification appliqué lors de l'étape g) est sélectionné dans le groupe comportant le produit scalaire, et le produit vectoriel entre la donnée courante et E[X].

Ainsi, un tel produit scalaire et un tel produit vectoriel permettent de quantifier la similitude entre la donnée courante et E[X].

Selon une variante d'exécution, la réponse impulsionnelle est à valeurs réelles, et le critère d'identification appliqué lors de l'étape g) est le coefficient d'inter-corrélation entre la donnée courante et E[X].

Ainsi, un tel coefficient d'inter-corrélation permet de quantifier la similitude entre la donnée courante et E[X].

Selon un mode de mise en œuvre, le signal se propage dans un canal de propagation, et la donnée fournie lors de l'étape b) comporte une information représentative de la distance entre l'outil dans la position de coopération correspondante et l'émetteur ou le récepteur correspondant dans l'environnement, ladite information étant extraite de la réponse impulsionnelle du canal de propagation correspondant, X étant scalaire.

Ainsi, l'information extraite de la réponse impulsionnelle est représentative de la distance entre l'outil dans la position de coopération correspondante et l'émetteur ou le récepteur correspondant dans l'environnement, et donc représentative de la position de coopération correspondante. Cette information est une information extrinsèque issue de la réponse impulsionnelle qui permet de distinguer deux positions de coopération distinctes. L'extraction de l'information comporte une étape d'analyse de la réponse impulsionnelle afin de fournir un temps d'arrivée du signal ULB. Puis un temps de propagation du signal ULB est calculé à partir du temps d'arrivée. Enfin, la distance est extraite à partir du temps de propagation.

Selon un mode de mise en œuvre, l'étape d) comporte une étape d1) calculer l'écart-type de X, noté $\sigma_X$, pour chacune des K positions de coopération à partir des M données acquises lors de l'étape c), et le critère d'identification appliqué lors de l'étape g) comprend en outre $\sigma_X$.

Ainsi, le couple E[X] et $\sigma_X$ forme une signature caractéristique des K positions de coopération ; E[X] forme une base pour quantifier la similitude entre la position courante et les K positions de coopération tandis que $\sigma_X$ permet de quantifier la fiabilité de la signature.

Selon une forme d'exécution, le critère d'identification appliqué lors de l'étape g) est la distance de Mahalanobis entre la donnée courante et E[X].

Ainsi, la distance de Mahalanobis permet de quantifier la similitude entre la donnée courante et E[X].

Selon une variante d'exécution, le critère d'identification appliqué lors de l'étape g) est issu de la méthode des moindres carrés ou de la méthode du gradient. Ces méthodes permettent de quantifier la similitude entre la donnée courante et E[X].

Selon une forme d'exécution, l'étape e) est exécutée en disposant l'outil Q fois dans les K positions de coopération selon un ordre prédéterminé, où Q est un entier naturel supérieur ou égal à M, et les étapes c) et f) sont concomitantes, les données acquises lors de l'étape c) étant issues des données courantes acquises lors de l'étape f).

Ainsi, la signature caractéristique des K positions de coopération, c'est-à-dire au moins E[X], peut être obtenue au cours des étapes e) et f), à partir de positions courantes successives. Les étapes c) et f) concomitantes autorisent un auto-calibrage des mesures des données courantes acquises lors de l'étape f).

Selon une variante d'exécution, l'étape c) est exécutée en disposant l'outil une unique fois successivement dans les K positions de coopération, et l'étape c) est antérieure à l'étape e).

Ainsi, la signature caractéristique des K positions de coopération, c'est-à-dire au moins E[X], est obtenue avant les étapes e) et f). L'étape c) antérieure à l'étape e) autorise un pré-calibrage des mesures de données courantes acquises lors de l'étape f).

Selon une forme d'exécution, l'étape b) est exécutée avec N récepteurs fixes dans l'environnement, N étant un entier naturel supérieur ou égal à 1.

Ainsi, un nombre N important de récepteurs fixes permet d'augmenter la fiabilité de la signature caractéristique des K positions.

Selon une forme d'exécution, l'étape b) est exécutée avec N émetteurs-récepteurs fixes dans l'environnement, N étant un entier naturel supérieur ou égal à 2.

Ainsi, un nombre N important d'émetteurs-récepteurs fixes permet d'augmenter la fiabilité de la signature caractéristique des K positions.

Selon une variante d'exécution, l'étape b) est exécutée avec un unique récepteur mobile dans l'environnement entre N positions prédéterminées selon les K positions de coopération, N étant un entier naturel supérieur ou égal à 2.

Ainsi, un unique récepteur mobile entre N positions prédéterminées selon les K positions de coopération permet d'avoir un effet identique à N récepteurs fixes, N étant entier naturel supérieur ou égal à 2. Un nombre N important de positions prédéterminées permet d'augmenter la fiabilité de la signature caractéristique des K positions. Le fait d'utiliser un unique récepteur mobile avec un nombre N important de positions prédéterminées permet donc d'augmenter la fiabilité de la signature caractéristique des K positions tout en s'affranchissant des coûts de matériel liés à N récepteurs fixes.

Selon une variante d'exécution, l'étape b) est exécutée avec un unique émetteur-récepteur mobile dans l'environnement entre N positions prédéterminées selon les K positions de coopération, N étant un entier naturel supérieur ou égal à 2.

Ainsi, un unique émetteur-récepteur mobile entre N positions prédéterminées selon les K positions de coopération permet d'avoir un effet identique à N émetteurs-récepteurs fixes, N étant entier naturel supérieur ou égal à 2. Un nombre N important de positions prédéterminées permet d'augmenter la fiabilité de la signature caractéristique des K positions. Le fait d'utiliser un unique émetteur-récepteur mobile avec un nombre N important de positions prédéterminées permet donc d'augmenter la fiabilité de la signature caractéristique des K positions tout en s'affranchissant des coûts de matériel liés à N émetteurs-récepteurs fixes.

Avantageusement, l'étape f) est exécutée en acquérant M' fois la donnée courante, où M' est un entier naturel, de préférence strictement inférieur à M.

Ainsi, le fait d'acquérir M' fois la donnée courante permet d'améliorer la qualité de mesure en réduisant l'influence du bruit de fond de l'environnement pour l'identification.

Selon une forme d'exécution, la donnée courante forme une variable aléatoire, notée X', l'étape f) comporte une étape de calcul de l'espérance de X', notée E[X'], à partir des M' données courantes acquises, et le critère d'identification est appliqué à partir de E[X'] lors de l'étape g).

Selon une variante d'exécution, le critère d'identification est appliqué à partir de chacune des M' données courantes lors de l'étape g), et la position courante est identifiée comme la position de coopération majoritairement identifiée après l'étape g).

Selon une forme d'exécution, les K objets sont fixes dans l'environnement.

Ainsi, l'outil peut être disposé dans des positions de coopération de manière non reproductible, par exemple par l'intermédiaire d'un opérateur.

Selon un mode de mise en œuvre, l'étape c) est exécutée en disposant l'outil dans les K positions de coopération de manière reproductible.

Ainsi, il est possible de mettre en œuvre le procédé y compris lorsque les K objets sont mobiles dans l'environnement. L'étape c) peut être exécutée avec un automate.

**Brève description des dessins**

D'autres caractéristiques et avantages apparaîtront dans la description qui va suivre de différents modes de mise en œuvre d'un procédé selon l'invention, donnés à titre d'exemples non limitatifs, en référence aux dessins annexés dans lesquels :

- la figure 1 est une vue schématique d'un outil disposé successivement dans 3 positions de coopération avec la présence de 4 récepteurs fixes selon un premier procédé selon l'invention,
- la figure 2 est une vue schématique de l'outil de la figure 1 dans une k ième position de coopération donnée, et illustrant la réception par les 4 récepteurs fixes du signal de type ULB envoyé par l'outil,
- la figure 3 est une vue schématique d'un outil dans une k ième position de coopération donnée avec la présence d'un récepteur mobile entre 4 positions prédéterminées selon le premier procédé,
- les figures 4a et 4b sont des vues schématiques d'une réponse impulsionnelle d'un canal de propagation en amplitude pour deux récepteurs respectifs, correspondant à une position de coopération donnée, les unités des axes étant arbitraires,
- la figure 5 est une vue schématique d'un outil disposé dans une k ième position de coopération donnée selon un deuxième procédé selon l'invention, et illustrant l'émission d'un signal de type ULB par 4 émetteurs fixes et reçu par l'outil,
- la figure 6 est une vue schématique d'un outil disposé dans une k ième position de coopération donnée selon un troisième procédé selon l'invention, et illustrant l'émission-réception d'un signal de type ULB par 4 émetteurs-récepteurs fixes et par l'outil.

Pour les différents modes de mise en œuvre, les mêmes références seront utilisées pour des éléments identiques ou assurant la même fonction, par souci de simplification de la description.

## Exposé détaillé des modes de réalisation

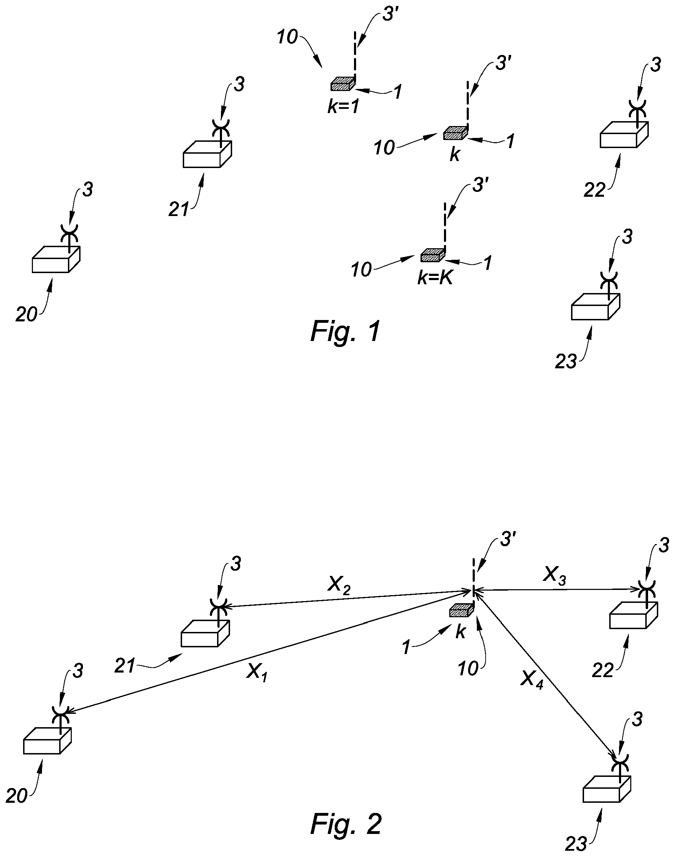

Le premier procédé illustré aux figures 1 à 3 est un procédé d'identification de la position d'un ensemble de K objets dans un environnement, K étant un entier naturel supérieur ou égal à 2, le procédé comportant les étapes :

a) prévoir un outil 1 configuré pour coopérer avec chaque objet de l'ensemble dans une position dite de coopération, l'outil 1 étant équipé d'un émetteur 10 d'un signal de type Ultra Large Bande (ULB),
b) agencer au moins un récepteur 20, 21, 22, 23 dans l'environnement pour recevoir ledit signal pour chacune des K positions de coopération, le ou chaque récepteur 20, 21, 22, 23 étant configuré pour fournir une donnée représentative de la position de coopération correspondante, ladite donnée formant une variable aléatoire, notée X,
c) acquérir au moins M fois la donnée fournie par le ou chaque récepteur 20, 21, 22, 23 pour chacune des K positions de coopération, où M est un entier naturel supérieur à une valeur prédéterminée,
d) calculer l'espérance de X, notée E[X], pour chacune des K positions de coopération à partir des M données acquises lors de l'étape c),
e) disposer l'outil 1 dans une position de coopération, dite position courante,
f) acquérir au moins une donnée, dite donnée courante, fournie par le ou chaque récepteur 20, 21, 22, 23 pour la position courante,
g) appliquer un critère d'identification comprenant E[X] à partir de la donnée courante de manière à identifier la position courante parmi les K positions de coopération.

A titre d'exemples non limitatifs, les objets peuvent être des points d'assemblage tels que des vis, des rivets, des points de soudure. L'outil 1 peut alors être respectivement une visseuse, une riveteuse, une soudeuse.
Les K objets ne sont pas représentés aux figures 1 à 3. Les K objets sont de préférence fixes dans l'environnement.
L'environnement peut être un environnement industriel et/ou métallique, Par « environnement métallique », on entend un environnement comprenant un ensemble d'entités métalliques pouvant exclure la présence de lignes de visée (*line-of-sight* en langue anglaise) d'une onde radio.
Par « Ultra Large Bande », on entend un signal présentant :

- une largeur de bande absolue mesurée à -10 dB supérieure à 250 MHz, voire supérieure à 500 MHz si l'on considère la définition américaine de l'ULB, ou
- une largeur de bande relative mesurée à -10 dB supérieure à 20% de la fréquence centrale.

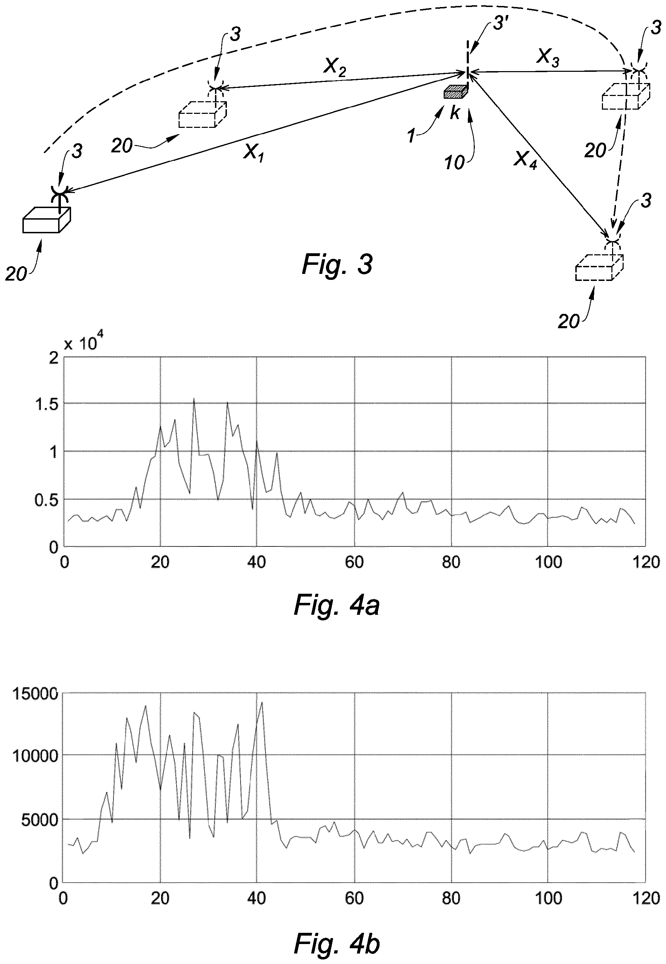

Les signaux de type ULB conviennent tout particulièrement à un environnement industriel et/ou métallique dans la mesure où ces signaux sont peu confrontés aux problèmes de multi-trajets. Le signal de type ULB est de préférence un signal impulsionnel.
Selon un mode de mise en œuvre, l'étape b) est exécutée avec N récepteurs fixes dans l'environnement, N étant un entier naturel supérieur ou égal à 1. Dans l'exemple illustré aux figures 1 et 2, l'étape b) est exécutée avec quatre récepteurs 20, 21, 22, 23 fixes dans l'environnement. Les quatre récepteurs 20, 21, 22, 23 sont agencés lors de l'étape b) dans l'environnement pour recevoir le signal ULB pour chacune des K positions de coopération. A cet effet, chaque récepteur 20, 21, 22, 23 est équipé d'une antenne de réception 3 configurée pour recevoir le signal ULB. L'émetteur 10 équipant l'outil 1 comporte une antenne d'émission 3'. Bien entendu, il est possible d'agencer un nombre différent de récepteurs selon la fiabilité souhaitée de la signature caractéristique des K positions de coopération, se manifestant au moins par E[X]. Une configuration à un seul récepteur est envisageable pour un système particulièrement simple. A la figure 2, sont illustrées les données représentatives de la k ième position $X_1$, $X_2$, $X_3$, $X_4$ fournies respectivement par les quatre récepteurs 20, 21, 22, 23. On note $X_{k,n}$ la donnée représentative de la k ième position de coopération, k étant compris entre 1 et K, et fournie par le n ième récepteur 20, 21, 22, 23, n étant compris entre 1 et N.
Selon un mode de mise en œuvre, le signal de type ULB se propage entre l'émetteur 10 et chaque récepteur 20, 21, 22, 23 dans un canal de propagation. La donnée $X_{k,n}$ fournie lors de l'étape b) par le n ième récepteur 20, 21, 22, 23 comporte une information représentative de la distance entre l'outil 1 dans la position de coopération correspondante (la k ième) et le récepteur 20, 21, 22, 23 correspondant (le n ième). La distance est extraite de la réponse impulsionnelle du canal de propagation correspondant. $X_{k,n}$ est scalaire. A titre illustratif, les figures 4a et 4b montrent la réponse impulsionnelle en amplitude fournie respectivement par deux récepteurs pour une position de coopération donnée. La réponse impulsionnelle peut également être en énergie.
Lors de l'étape c), la valeur pour M est de préférence prédéterminée en fonction du bruit de fond de l'environnement. Avantageusement, M est compris entre 10 et 100.

Selon une forme d'exécution, l'étape e) est exécutée en disposant l'outil 1 Q fois dans les K positions de coopération selon un ordre prédéterminé, où Q est un entier naturel supérieur ou égal à M, et les étapes c) et f) sont concomitantes, les données acquises lors de l'étape c) étant issues des données courantes acquises lors de l'étape f). L'ordre de disposition de l'outil 1 est prédéterminé au sens où un opérateur répète Q fois une séquence ordonnée de K positions de coopération avec une probabilité d'erreur faible, c'est-à-dire inférieure à $10^{-2}$. Les données acquises lors de l'étape c) issues des données courantes acquises lors de l'étape f) sont avantageusement mémorisées avant d'exécuter l'étape d) de calcul. Il en résulte que l'étape g) d'identification ne peut s'effectuer concomitamment à l'étape f) au moins pendant les Q itérations.

Selon une variante d'exécution, l'étape c) est exécutée en disposant l'outil 1 une unique fois successivement dans les K positions de coopération, et l'étape c) est antérieure à l'étape e). Il en résulte que l'étape g) d'identification peut s'effectuer concomitamment à l'étape f).

Selon une forme d'exécution, l'étape c) est exécutée en disposant l'outil 1 dans les K positions de coopération de manière reproductible.

L'étape d) comporte avantageusement une étape d1) calculer l'écart-type de X, noté $\sigma_X$, pour chacune des K positions de coopération à partir des M données acquises lors de l'étape c), et le critère d'identification appliqué lors de l'étape g) comprend en outre $\sigma_X$.

On note :

- $\mu_{k,n}$ l'espérance de $X_{k,n}$,
- $\sigma_{k,n}$ l'écart-type de $X_{k,n}$.

A l'issue de l'étape d), on obtient une matrice, notée $\mathcal{M}_k$, formant une signature de la k ième position de coopération.

$$\mathcal{M}_k = \begin{pmatrix} \mu_{k,1} & \sigma_{k,1} \\ \vdots & \vdots \\ \mu_{k,N} & \sigma_{k,N} \end{pmatrix}$$

Le critère d'identification appliqué lors de l'étape g) est avantageusement la distance de Mahalanobis entre la donnée courante et $\mu_{k,n}$ pour les K positions de coopération.

Si l'on note $r_n$ la donnée courante acquise lors de l'étape f) par le n ième récepteur, n étant compris entre 1 et N, la distance de Mahalanobis s'écrit :

$$d_k = \frac{1}{N} \sqrt{\sum_{n=1}^{N} \left( \frac{r_n - \mu_{k,n}}{\sigma_{k,n}} \right)^2}$$

La position courante identifiée à l'issue de l'étape g) correspond à la k ième position de coopération qui minimise $d_k$. L'identification de la position courante permet d'identifier la position de l'objet correspondant.

Selon un mode de mise en œuvre, l'étape f) est exécutée en acquérant M' fois la donnée courante fournie par chaque récepteur 20, 21, 22, 23 pour la position courante. M' est un entier naturel, de préférence strictement inférieur à M. La donnée courante forme une variable aléatoire, notée X'. L'étape f) comporte une étape de calcul de l'espérance de X', notée E[X'], à partir des M' données courantes acquises, pour chaque récepteur 20, 21, 22, 23. Le critère d'identification est appliqué à E[X'] lors de l'étape g). Ainsi, si l'on note $\mu'_n$ l'espérance E[X'] calculée pour le n ième récepteur 20, 21, 22, 23, la distance de Mahalanobis s'écrit :

$$d_k = \frac{1}{N} \sqrt{\sum_{n=1}^{N} \left( \frac{\mu'_n - \mu_{k,n}}{\sigma_{k,n}} \right)^2}$$

La position courante identifiée à l'issue de l'étape g) correspond à la k ième position de coopération qui minimise $d_k$. L'identification de la position courante permet d'identifier la position de l'objet correspondant.

Selon une variante d'exécution, le critère d'identification est appliqué à chacune des M' données courantes lors de l'étape g), et la position courante est identifiée comme la position de coopération majoritairement identifiée après l'étape g).

Selon un mode de mise en œuvre, la donnée $X_{k,n}$ fournie par le n ième récepteur 20, 21, 22, 23 comporte tout ou partie de la réponse impulsionnelle du canal de propagation correspondant, c'est-à-dire le canal de propagation entre l'outil 1 dans la position de coopération correspondante (la k ième) et le récepteur 20, 21, 22, 23 correspondant (le n ième). $X_{k,n}$ est vectorielle, et comporte L valeurs, L étant un entier naturel, de préférence compris entre 50 et 200. La donnée courante fournie par le n ième récepteur 20, 21, 22, 23 est notée $X'_n$ et comporte également L valeurs.

Selon une forme d'exécution, la réponse impulsionnelle est à valeurs complexes. Le critère d'identification appliqué lors de l'étape g) est sélectionné dans le groupe comportant le produit scalaire, et le produit vectoriel entre la donnée courante et l'espérance de $X_{k,n}$ notée $\mu_{k,n}$. $\overline{X'_n}$ est le conjugué de $X'_n$.

Le produit scalaire, noté SCAL, pour chaque récepteur 20, 21, 22, 23, et pour la k ième position de coopération, s'écrit de la manière suivante :

$$SCAL(k,n) = \sum_{l=1}^{L} \mu_{k,n}(l) * \overline{X'_n(l)}$$

$$SCAL(k,n) = \sum_{l=1}^{L} \left( \Re\left[\mu_{k,n}(l)\right] * \Re[X'_n(l)] + \Im\left[\mu_{k,n}(l)\right] * \Im[X'_n(l)]\right)$$

où :

- $\Re$ est la partie réelle,
- $\Im$ est la partie imaginaire.

La position courante identifiée à l'issue de l'étape g) correspond à la k ième position de coopération qui maximise SCAL(k,n) pour chaque récepteur 20, 21, 22, 23 ou pour une majorité de récepteurs 20, 21, 22, 23. L'identification de la position courante permet d'identifier la position de l'objet correspondant.

Le produit vectoriel, noté VECT, pour chaque récepteur 20, 21, 22, 23, et pour la k ième position de coopération, s'écrit de la manière suivante :

$$VECT(k,n) = \sum_{l=1}^{L} \left( \Re\left[\mu_{k,n}(l)\right] * \Im[X'_n(l)] - \Im\left[\mu_{k,n}(l)\right] * \Re[X'_n(l)]\right)$$

La position courante identifiée à l'issue de l'étape g) correspond à la k ième position de coopération qui minimise VECT(k,n) pour chaque récepteur 20, 21, 22, 23 ou pour une majorité de récepteurs 20, 21, 22, 23. L'identification de la position courante permet d'identifier la position de l'objet correspondant.

Selon une forme d'exécution, la réponse impulsionnelle est à valeurs réelles. Le critère d'identification appliqué lors de l'étape g) est le coefficient d'inter-corrélation entre la donnée courante fournie par le n ième récepteur 20, 21, 22, 23, notée $X'_n$ et l'espérance de $X_{k,n}$ notée $\mu_{k,n}$.

Le coefficient d'inter-corrélation, noté IC, pour chaque récepteur 20, 21, 22, 23, et pour la k ième position de coopération, s'écrit de la manière suivante :

$$IC(k,n) = \sum_{l=1}^{L} \mu_{k,n}(l) * X'_n(l)$$

La position courante identifiée à l'issue de l'étape g) correspond à la k ième position de coopération qui maximise IC(k,n) pour chaque récepteur 20, 21, 22, 23 ou pour une majorité de récepteurs 20, 21, 22, 23. L'identification de la position courante permet d'identifier la position de l'objet correspondant.

Selon un mode de mise en œuvre illustré à la figure 3, le procédé diffère en ce que l'étape b) est exécutée avec un unique récepteur 20 mobile dans l'environnement entre N positions prédéterminées selon les K positions de coopération, N étant entier naturel supérieur ou égal à 2. Dans l'exemple illustré à la figure 3, le récepteur 20 est mobile entre 4 positions prédéterminées. La flèche en traits pointillés indique le déplacement du récepteur 20.

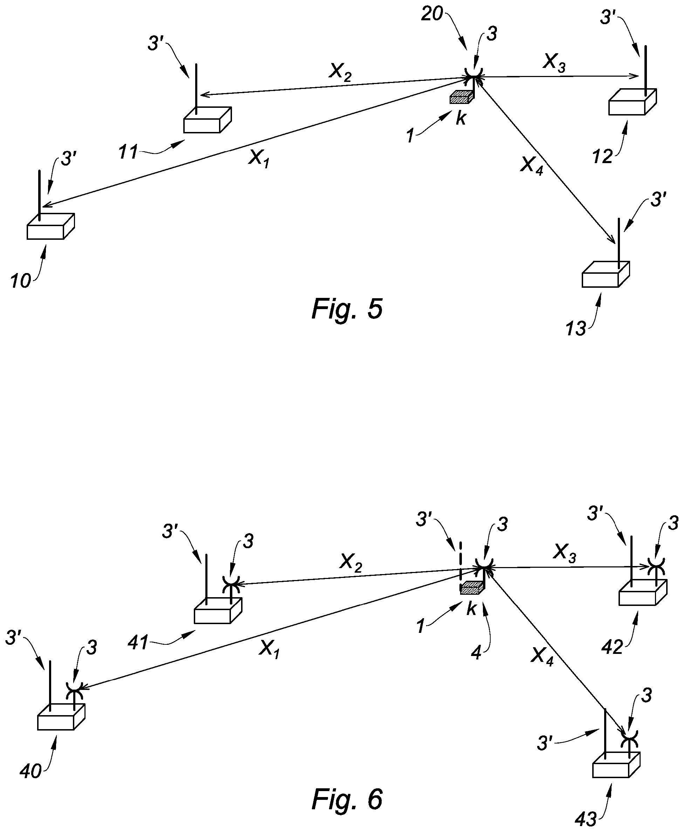

Le deuxième procédé illustré à la figure 5 diffère du premier procédé en ce que l'outil 1 est équipé d'un récepteur 20 muni d'une antenne de réception 3 d'un signal de type ULB, et en ce que l'étape b) consiste à agencer au moins un émetteur 10, 11, 12, 13 dans l'environnement pour émettre ledit signal pour chacune des K positions de coopération. Le ou chaque émetteur 10, 11, 12, 13 est muni d'une antenne d'émission 3'.

Dans le cas des premier et deuxième procédés, l'extraction de la distance à partir de la donnée fournie lors de l'étape b) est avantageusement issue d'une technique de télémétrie (*Ranging* en langue anglaise) dite des différences de temps d'arrivée TDOA (*Time Difference of Arrivai* en langue anglaise).

Dans le premier procédé, les données acquises lors de l'étape c) et de l'étape f) par les récepteurs 20, 21, 22, 23 de l'environnement doivent être regroupées pour traitement, ce qui peut être complexe à mettre en œuvre. En contrepartie, le taux de rafraîchissement, et donc le nombre de mesures acquises, est augmenté. La réactivité du système et/ou la précision de mesure (par exemple en moyennant plusieurs mesures) peuvent donc être augmentées.

Dans le deuxième procédé, les données acquises lors de l'étape c) et de l'étape f) sont centralisées par le récepteur 20 de l'outil 1. Le traitement des données peut donc s'effectuer directement, sans retransmission des mesures acquises vers un nœud central. Le taux de rafraîchissement est bien entendu, dans ce cas, moins bon.

Le troisième procédé illustré à la figure 6 diffère du premier procédé en ce que l'outil 1 est équipé d'un émetteur-récepteur 4 d'un signal de type ULB muni d'une antenne de réception 3 et d'une antenne d'émission 3', et en ce que l'étape b) consiste à agencer au moins un émetteur-récepteur 40, 41, 42, 43 dans l'environnement pour émettre et recevoir ledit signal pour chacune des K positions de coopération. L'extraction de la distance à partir de la donnée fournie lors de l'étape b) est avantageusement issue d'une technique de télémétrie (*Ranging* en langue anglaise) dite des temps d'arrivée TOA (*Time of Arrivai* en langue anglaise) associé à un protocole appelé TWR (*Two Way Ranging* en langue anglaise) qui permet d'estimer le temps d'aller-retour entre l'émetteur-récepteur de l'outil et chaque émetteur-récepteur de l'environnement, duquel on tire la distance correspondante.

A titre d'exemple non limitatif, lorsque l'outil 1 est une visseuse et les K objets sont des points d'assemblage tels que des vis, en termes de performance, on a intérêt à effectuer le plus de mesures par temps de vissage grâce à une amélioration de la réactivité et/ou de la précision (en moyennant). Le procédé le plus performant, c'est-à-dire qui permet de faire le plus de mesures par temps de vissage, est le premier procédé, suivi du deuxième procédé, et suivi enfin du troisième procédé, sous condition d'avoir des moyens de rapatriement des données adaptés, tels qu'un lien radio bande étroite classique (par exemple de type Bluetooth, Wifi), couramment utilisé sur un certain nombre de matériels ULB existants.

La méthode de positionnement ULB classique (par trilatération) évite la technique TDOA car cela nécessite une procédure de synchronisation fine des nœuds fixes entre eux très lourde. Avec la technique de signature caractéristique des positions de coopération, cette procédure de synchronisation fine n'est pas nécessaire : une synchronisation grossière pour chaque nœud fixe, indépendamment des autres, basée simplement sur un recadrage de la fenêtre de réception basé sur le temps d'arrivée de la trame ULB précédente est suffisante et simple à mettre en œuvre.

## Revendications

**1.** Procédé d'identification de la position d'un ensemble de K points d'assemblage dans un environnement, K étant un entier naturel supérieur ou égal à 2, le procédé comportant les étapes :

a) prévoir un outil (1) configuré pour coopérer avec chaque point d'assemblage de l'ensemble dans une position dite de coopération, l'outil (1) étant équipé d'un émetteur (10) d'un signal de type Ultra Large Bande,

b) agencer au moins un récepteur (20, 21, 22, 23) dans l'environnement pour recevoir ledit signal pour chacune des K positions de coopération, le signal se propageant dans un canal de propagation entre l'émetteur (10) et le au moins un récepteur (20, 21, 22, 23), le ou chaque récepteur (20, 21, 22, 23) étant configuré pour fournir une donnée ($X_1$, $X_2$, $X_3$, $X_4$) représentative de la position de coopération correspondante, ladite donnée formant une variable aléatoire comportant tout ou partie de la réponse impulsionnelle du canal de propagation correspondant, notée X,

c) acquérir au moins M fois la donnée ($X_1$, $X_2$, $X_3$, $X_4$) fournie par le ou chaque récepteur (20, 21, 22, 23) pour chacune des K positions de coopération, où M est un entier naturel supérieur à une valeur prédéterminée,

d) calculer l'espérance de X, notée E[X], pour chacune des K positions de coopération à partir des M données acquises lors de l'étape c) pour chaque récepteur (20, 21, 22, 23),

e) disposer l'outil (1) dans une position de coopération, dite position courante,

f) acquérir au moins une donnée, dite donnée courante, fournie par le ou chaque récepteur (20, 21, 22, 23)

pour la position courante,
g) appliquer un critère d'identification comprenant E[X] à partir de la donnée courante de manière à identifier la position courante parmi les K positions de coopération

**caractérisé en ce que** lorsque la donnée X est sous forme vectorielle:

- le critère d'identification appliqué lors de l'étape g) est sélectionné dans le groupe comportant le produit scalaire, et le produit vectoriel entre la donnée courante et E[X], lorsque la réponse impulsionnelle est à valeurs complexes, ou
- le critère d'identification appliqué lors de l'étape g) est le coefficient d'inter-corrélation entre la donnée courante et E[X], lorsque la réponse impulsionnelle est à valeurs complexes, ou **en ce que**

lorsque la donnée ($X_1$, $X_2$, $X_3$, $X_4$) fournie lors de l'étape b) est sous forme scalaire et comporte une information représentative de la distance entre l'outil (1) dans la position de coopération correspondante et le au moins un récepteur (20, 21, 22, 23) correspondant dans l'environnement, ladite information étant extraite de la réponse impulsionnelle du canal de propagation correspondant, l'étape d) comporte une étape d1) calculer l'écart-type de X, noté $\sigma_X$, pour chacune des K positions de coopération à partir des M données acquises lors de l'étape c), et **en ce que** le critère d'identification appliqué lors de l'étape g) comprend en outre $\sigma_X$.

2. Procédé d'identification de la position d'un ensemble de K points d'assemblage dans un environnement, K étant un entier naturel supérieur ou égal à 2, le procédé comportant les étapes :

a) prévoir un outil (1) configuré pour coopérer avec chaque point d'assemblage de l'ensemble dans une position dite de coopération, l'outil (1) étant équipé d'un récepteur (20) d'un signal de type Ultra Large Bande,
b) agencer au moins un émetteur (10, 11, 12, 13) dans l'environnement pour émettre ledit signal pour chacune des K positions de coopération, le signal se propageant dans un canal de propagation entre le au moins un émetteur (10, 11, 12, 13) et le récepteur (20), le récepteur (20) de l'outil (1) étant configuré pour fournir une donnée ($X_1$, $X_2$, $X_3$, $X_4$) représentative de la position de coopération correspondante comportant tout ou partie de la réponse impulsionnelle du canal de propagation correspondant, ladite donnée formant une variable aléatoire, notée X,
c) acquérir au moins M fois la donnée ($X_1$, $X_2$, $X_3$, $X_4$) fournie par le récepteur (20) pour chacune des K positions de coopération, où M est un entier naturel supérieur à une valeur prédéterminée,
d) calculer l'espérance de X, notée E[X], pour chacune des K positions de coopération à partir des M données acquises lors de l'étape c),
e) disposer l'outil (1) dans une position de coopération, dite position courante,
f) acquérir au moins une donnée, dite donnée courante, fournie par le récepteur (20) pour la position courante,
g) appliquer un critère d'identification comprenant E[X] à partir de la donnée courante de manière à identifier la position courante parmi les K positions de coopération

**caractérisé en ce que** lorsque la donnée X est sous forme vectorielle:

- le critère d'identification appliqué lors de l'étape g) est sélectionné dans le groupe comportant le produit scalaire, et le produit vectoriel entre la donnée courante et E[X], lorsque la réponse impulsionnelle est à valeurs complexes, ou
- le critère d'identification appliqué lors de l'étape g) est le coefficient d'inter-corrélation entre la donnée courante et E[X], lorsque la réponse impulsionnelle est à valeurs complexes, ou **en ce que**

lorsque la donnée ($X_1$, $X_2$, $X_3$, $X_4$) fournie lors de l'étape b) est sous forme scalaire et comporte une information représentative de la distance entre l'outil (1) dans la position de coopération correspondante et le au moins un émetteur (10, 11, 12, 13) correspondant dans l'environnement, ladite information étant extraite de la réponse impulsionnelle du canal de propagation correspondant, l'étape d) comporte une étape d1) calculer l'écart-type de X, noté $\sigma_X$, pour chacune des K positions de coopération à partir des M données acquises lors de l'étape c), et **en ce que** le critère d'identification appliqué lors de l'étape g) comprend en outre $\sigma_X$.

3. Procédé d'identification de la position d'un ensemble de K points d'assemblage dans un environnement, K étant un entier naturel supérieur ou égal à 2, le procédé comportant les étapes :

a) prévoir un outil (1) configuré pour coopérer avec chaque point d'assemblage de l'ensemble dans une position dite de coopération, l'outil (1) étant équipé d'un émetteur-récepteur (4) d'un signal de type Ultra Large Bande,

b) agencer au moins un émetteur-récepteur (40, 41, 42, 43) dans l'environnement pour émettre et recevoir ledit signal pour chacune des K positions de coopération, le signal se propageant dans un canal de propagation entre l'émetteur-récepteur (4) de l'outil (1) et le au moins un émetteur-récepteur (40, 41, 42, 43) de l'environnement, l'émetteur-récepteur (4) de l'outil (1) et chaque émetteur-récepteur (40, 41, 42, 43) de l'environnement étant configurés pour fournir une donnée ($X_1$, $X_2$, $X_3$, $X_4$) représentative de la position de coopération correspondante comportant tout ou partie de la réponse impulsionnelle du canal de propagation correspondant, ladite donnée formant une variable aléatoire, notée X,

c) acquérir au moins M fois la donnée ($X_1$, $X_2$, $X_3$, $X_4$) fournie par l'émetteur-récepteur (4) de l'outil (1) et chaque émetteur-récepteur (40, 41, 42, 43) de l'environnement pour chacune des K positions de coopération, où M est un entier naturel supérieur à une valeur prédéterminée,

d) calculer l'espérance de X, notée E[X], pour chacune des K positions de coopération à partir des M données acquises lors de l'étape c),

e) disposer l'outil (1) dans une position de coopération, dite position courante,

f) acquérir au moins une donnée, dite donnée courante, fournie par l'émetteur-récepteur (4) de l'outil (1) et chaque émetteur-récepteur (40, 41, 42, 43) de l'environnement pour la position courante,

g) appliquer un critère d'identification comprenant E[X] à partir de la donnée courante de manière à identifier la position courante parmi les K positions de coopération

**caractérisé en ce que** lorsque la donnée X est sous forme vectorielle:

- le critère d'identification appliqué lors de l'étape g) est sélectionné dans le groupe comportant le produit scalaire, et le produit vectoriel entre la donnée courante et E[X], lorsque la réponse impulsionnelle est à valeurs complexes, ou

- le critère d'identification appliqué lors de l'étape g) est le coefficient d'inter-corrélation entre la donnée courante et E[X], lorsque la réponse impulsionnelle est à valeurs complexes, ou **en ce que**

lorsque la donnée ($X_1$, $X_2$, $X_3$, $X_4$) fournie lors de l'étape b) est sous forme scalaire et comporte une information représentative de la distance entre l'outil (1) dans la position de coopération correspondante et le au moins un émetteur-récepteur (40, 41, 42, 43) correspondant dans l'environnement, ladite information étant extraite de la réponse impulsionnelle du canal de propagation correspondant, l'étape d) comporte une étape d1) calculer l'écart-type de X, noté $\sigma_X$, pour chacune des K positions de coopération à partir des M données acquises lors de l'étape c), et **en ce que** le critère d'identification appliqué lors de l'étape g) comprend en outre $\sigma_X$.

4. Procédé selon l'une des revendications 1 à 3, **caractérisé en ce que** la donnée X est scalaire et que le critère d'identification appliqué lors de l'étape g) est la distance de Mahalanobis entre la donnée courante et E[X].

5. Procédé selon l'une des revendications 1 à 4, **caractérisé en ce que** l'étape e) est exécutée en disposant l'outil (1) Q fois dans les K positions de coopération selon un ordre prédéterminé, où Q est un entier naturel supérieur ou égal à M, et **en ce que** les étapes c) et f) sont concomitantes, les données acquises lors de l'étape c) étant issues des données courantes acquises lors de l'étape f).

6. Procédé selon l'une des revendications 1 à 4, **caractérisé en ce que** l'étape c) est exécutée en disposant l'outil (1) une unique fois successivement dans les K positions de coopération, et **en ce que** l'étape c) est antérieure à l'étape e).

7. Procédé selon l'une des revendications 1 à 6 en combinaison avec la revendication 1, **caractérisé en ce que** l'étape b) est exécutée avec N récepteurs (20, 21, 22, 23) fixes dans l'environnement, N étant un entier naturel supérieur ou égal à 1.

8. Procédé selon l'une des revendications 3 à 6, **caractérisé en ce que** l'étape b) est exécutée avec N émetteurs-récepteurs (40, 41, 42, 43) fixes dans l'environnement, N étant un entier naturel supérieur ou égal à 1.

9. Procédé selon l'une des revendications 1 à 6 en combinaison avec la revendication 1, **caractérisé en ce que** l'étape b) est exécutée avec un unique récepteur (20) mobile dans l'environnement entre N positions prédéterminées selon les K positions de coopération, N étant un entier naturel supérieur ou égal à 2.

10. Procédé selon l'une des revendications 3 à 6, **caractérisé en ce que** l'étape b) est exécutée avec un unique émetteur-récepteur mobile dans l'environnement entre N positions prédéterminées selon les K positions de coopération, N étant un entier naturel supérieur ou égal à 2.

11. Procédé selon l'une des revendications 1 à 10, **caractérisé en ce que** l'étape f) est exécutée en acquérant M' fois la donnée courante, où M' est un entier naturel, de préférence strictement inférieur à M.

12. Procédé selon la revendication précédente, **caractérisé en ce que** la donnée courante forme une variable aléatoire, notée X', **en ce que** l'étape f) comporte une étape de calcul de l'espérance de X', notée E[X'], à partir des M' données courantes acquises, et **en ce que** le critère d'identification est appliqué à partir de E[X'] lors de l'étape g).

13. Procédé selon la revendication 11, **caractérisé en ce que** le critère d'identification est appliqué à partir de chacune des M' données courantes lors de l'étape g), et **en ce que** la position courante est identifiée comme la position de coopération majoritairement identifiée après l'étape g).

14. Procédé selon l'une des revendications 1 à 13, **caractérisé en ce que** les K points d'assemblage sont fixes dans l'environnement.

15. Procédé selon l'une des revendications 1 à 13, **caractérisé en ce que** l'étape c) est exécutée en disposant l'outil (1) dans les K positions de coopération de manière reproductible.


**Patentansprüche**

1. Verfahren zum Identifizieren der Position einer Gesamtheit von K Verbindungsstellen in einer Umgebung, wobei K eine natürliche ganze Zahl ist, die größer als oder gleich 2 ist, wobei das Verfahren die Schritte umfasst:

 a) Vorsehen eines Werkzeuges (1), das für ein Zusammenwirken mit jeder Verbindungsstelle der Gesamtheit in einer Position des Zusammenwirkens konfiguriert ist, wobei das Werkzeug (1) mit einem Sender (10) eines Ultrabreitbandsignals ausgestattet ist,
 b) Anordnen von mindestens einem Empfänger (20, 21, 22, 23) in der Umgebung, um das Signal für jede der K Positionen des Zusammenwirkens zu empfangen, wobei sich das Signal in einem Ausbreitungskanal zwischen dem Sender (10) und dem mindestens einen Empfänger (20, 21, 22, 23) ausbreitet, und der oder jeder Empfänger (20, 21, 22, 23) konfiguriert ist, um einen Dateninhalt ($X_1$, $X_2$, $X_3$, $X_4$) bereitzustellen, der für die entsprechende Position des Zusammenwirkens repräsentativ ist, wobei der Dateninhalt eine Zufallsvariable bildet, die die gesamte oder einen Teil der Impulsantwort des entsprechenden Ausbreitungskanals enthält, die mit X bezeichnet wird,
 c) mindestens M-maliges Erfassen des Dateninhalts ($X_1$, $X_2$, $X_3$, $X_4$), der von dem oder jedem Empfänger (20, 21, 22, 23) für jede der K Positionen des Zusammenwirkens bereitgestellt wird, wobei M eine natürliche ganze Zahl ist, die größer als ein vorgegebener Wert ist,
 d) Errechnen des Erwartungswertes von X, der mit E[X] bezeichnet wird, für jede der K Positionen des Zusammenwirkens ausgehend von den M Daten, die bei dem Schritt c) für jeden Empfänger (20, 21, 22, 23) erfasst werden,
 e) Anordnen des Werkzeuges (1) in einer als aktuelle Position bezeichneten Position des Zusammenwirkens,
 f) Erfassen von mindestens einem als aktueller Dateninhalt bezeichneten Dateninhalt, der von dem oder jedem Empfänger (20, 21, 22, 23) für die aktuelle Position bereitgestellt wird,
 g) Anwenden eines E[X] umfassenden und vom aktuellen Dateninhalt ausgehenden Identifizierungskriteriums zur Identifizierung der aktuellen Position unter den K Positionen des Zusammenwirkens,

 **dadurch gekennzeichnet, dass** bei Vorliegen des Dateninhalts X in Vektorform:

 - das im Schritt g) angewendete Identifizierungskriterium aus der Gruppe ausgewählt wird, die das Skalarprodukt und das Vektorprodukt zwischen dem aktuellen Dateninhalt und E[X] umfasst, wenn die Impulsantwort komplexe Werte aufweist, oder
 - das im Schritt g) angewendete Identifizierungskriterium der Interkorrelationskoeffizient zwischen dem aktuellen Dateninhalt und E[X] ist, wenn die Impulsantwort komplexe Werte aufweist, oder dadurch, dass wenn der in Schritt b) bereitgestellte Dateninhalt ($X_1$, $X_2$, $X_3$, $X_4$) in Skalarform vorliegt und eine aus der Impulsantwort des entsprechenden Ausbreitungskanals gewonnene Information aufweist, die für den Abstand zwischen dem Werkzeug (1) in der entsprechenden Position des Zusammenwirkens und dem mindestens einen entsprechenden Empfänger (20, 21, 22, 23) in der Umgebung repräsentativ ist, der Schritt d) einen Schritt d1) zur Berechnung der mit $\sigma_x$ bezeichneten Standardabweichung von X für jede der K Positionen des Zusammenwirkens ausgehend von den in Schritt c) gewonnen M Daten umfasst, und dass das im Schritt g) angewendete Identifizierungs-kriterium ferner $\sigma_x$ umfasst.

**2.** Verfahren zum Identifizieren der Position einer Gesamtheit von K Verbindungsstellen in einer Umgebung, wobei K eine natürliche ganze Zahl ist, die größer als oder gleich 2 ist, wobei das Verfahren die Schritte umfasst:

a) Vorsehen eines Werkzeugs (1), das für ein Zusammenwirken mit jeder Verbindungsstelle der Gesamtheit in einer Position des Zusammenwirkens konfiguriert ist, wobei das Werkzeug (1) mit einem Empfänger (20) eines Ultrabreitbandsignals ausgestattet ist,

b) Anordnen von mindestens einem Empfänger (10, 11, 12, 13) in der Umgebung, um das Signal für jede der K Positionen des Zusammenwirkens zu senden, wobei sich das Signal in einem Ausbreitungskanal zwischen dem mindestens einen Sender (10, 11, 12, 13) und dem Empfänger (20) ausbreitet, wobei der Empfänger (20) des Werkzeugs (1) konfiguriert ist, um einen Dateninhalt (X1, X2, X3, X4) bereitzustellen, der für die entsprechende Position des Zusammenwirkens repräsentativ ist, die die gesamte oder einen Teil der Impulsantwort des entsprechenden Ausbreitungskanals enthält, wobei der Dateninhalt eine mit X bezeichnete Zufallsvariable bildet,

c) mindestens M-maliges Erfassen des Dateninhalts (X1, X2, X3, X4), der von dem Empfänger (23) für jede der K Positionen des Zusammenwirkens bereitgestellt wird, wobei M eine natürliche ganze Zahl ist, die größer als ein vorgegebener Wert ist,

d) Errechnen des Erwartungswerts von X, der mit E[X] bezeichnet wird, für jede der K Positionen des Zusammenwirkens ausgehend von den M Daten, die bei dem Schritt c) erfasst werden,

e) Anordnen des Werkzeugs (1) in einer als aktuelle Position bezeichneten Position des Zusammenwirkens,

f) Erfassen von mindestens einem als aktueller Dateninhalt bezeichneten Dateninhalt, der von dem Empfänger (20) für die aktuelle Position bereitgestellt wird,

g) Anwenden eines E[X] umfassenden und vom aktuellen Dateninhalt ausgehenden Identifizierungskriteriums zur Identifizierung der aktuellen Position unter den K Positionen des Zusammenwirkens,

**dadurch gekennzeichnet, dass** bei Vorliegen des Dateninhalts X in Vektorform:

das im Schritt g) angewendete Identifizierungskriterium aus der Gruppe ausgewählt wird, die das Skalarprodukt und das Vektorprodukt zwischen dem aktuellen Dateninhalt und E[X] umfasst, wenn die Impulsantwort komplexe Werte aufweist, oder

das im Schritt g) angewendete Identifizierungskriterium der Interkorrelationskoeffizient zwischen dem aktuellen Dateninhalt und E[X] ist, wenn die Impulsantwort komplexe Werte aufweist, oder dadurch, dass

wenn der in Schritt b) bereitgestellte Dateninhalt (X1, X2, X3, X4) in Skalarform vorliegt und eine aus der Impulsantwort des entsprechenden Ausbreitungskanals gewonnene Information aufweist, die für den Abstand zwischen dem Werkzeug (1) in der entsprechenden Position des Zusammenwirkens und dem mindestens einen entsprechenden Sender (10, 11, 12, 13) in der Umgebung repräsentativ ist, der Schritt d) einen Schritt d1) zur Berechnung der mit ox bezeichneten Standardabweichung von X für jede der K Positionen des Zusammenwirkens ausgehend von den in Schritt c) gewonnen M Daten umfasst, und

dass das im Schritt g) angewendete Identifizierungskriterium ferner ox umfasst.

**3.** Verfahren zum Identifizieren der Position einer Gesamtheit von K Verbindungsstellen in einer Umgebung, wobei K eine natürliche ganze Zahl ist, die größer als oder gleich 2 ist, wobei das Verfahren die Schritte umfasst:

a) Vorsehen eines Werkzeugs (1), das für ein Zusammenwirken mit jeder Verbindungsstelle der Gesamtheit in einer Position des Zusammenwirkens konfiguriert ist, wobei das Werkzeug (1) mit einem Sender-Empfänger (4) eines Ultrabreitbandsignals ausgestattet ist,

b) Anordnen von mindestens einem Sender-Empfänger (40, 41, 42, 43) in der Umgebung, um das Signal für jede der K Positionen des Zusammenwirkens zu senden, wobei sich das Signal in einem Ausbreitungskanal zwischen dem Sender-Empfänger (4) des Werkzeugs (1) und dem mindestens einen Sender-Empfänger (40, 41, 42, 43) der Umgebung ausbreitet, wobei der Sender-Empfänger (4) des Werkzeugs (41) und jeder Sender-Empfänger (40, 41, 42, 43) der Umgebung konfiguriert ist, um einen Dateninhalt (X1, X2, X3, X4) bereitzustellen, der für die entsprechende Position des Zusammenwirkens repräsentativ ist, die die gesamte oder einen Teil der Impulsantwort des entsprechenden Ausbreitungskanals enthält, wobei der Dateninhalt eine mit X bezeichnete Zufallsvariable bildet,

c) mindestens M-maliges Erfassen des Dateninhalts (X1, X2, X3, X4), der von dem Sender-Empfänger (4) des Werkzeugs (1) und jedem Sender-Empfänger (40, 41, 42, 43) der Umgebung für jede der K Positionen des Zusammenwirkens bereitgestellt wird, wobei M eine natürliche ganze Zahl ist, die größer als ein vorgegebener Wert ist,

d) Errechnen des Erwartungswerts von X, der mit E[X] bezeichnet wird, für jede der K Positionen des Zusammenwirkens ausgehend von den M Daten, die bei dem Schritt c) erfasst werden,

e) Anordnen des Werkzeugs (1) in einer als aktuelle Position bezeichneten Position des Zusammenwirkens,

f) Erfassen von mindestens einem als aktueller Dateninhalt bezeichneten Dateninhalt, der von dem Sender-Empfänger (4) des Werkzeugs (1) und jedem Sender-Empfänger (40, 41, 42, 43) der Umgebung für die aktuelle Position bereitgestellt wird,

g) Anwenden eines E[X] umfassenden und vom aktuellen Dateninhalt ausgehenden Identifizierungskriteriums zur Identifizierung der aktuellen Position unter den K Positionen des Zusammenwirkens,

**dadurch gekennzeichnet, dass** bei Vorliegen des Dateninhalts X in Vektorform:

das im Schritt g) angewendete Identifizierungskriterium aus der Gruppe ausgewählt wird, die das Skalarprodukt und das Vektorprodukt zwischen dem aktuellen Dateninhalt und E[X] umfasst, wenn die Impulsantwort komplexe Werte aufweist, oder

das im Schritt g) angewendete Identifizierungskriterium der Interkorrelationskoeffizient zwischen dem aktuellen Dateninhalt und E[X] ist, wenn die Impulsantwort komplexe Werte aufweist, oder dadurch, dass

wenn der in Schritt b) bereitgestellte Dateninhalt (X1, X2, X3, X4) in Skalarform vorliegt und eine aus der Impulsantwort des entsprechenden Ausbreitungskanals gewonnene Information aufweist, die für den Abstand zwischen dem Werkzeug (1) in der entsprechenden Position des Zusammenwirkens und dem mindestens einen entsprechenden Sender-Empfänger (40, 41, 42, 43) in der Umgebung repräsentativ ist, der Schritt d) einen Schritt d1) zur Berechnung der mit ox bezeichneten Standardabweichung von X für jede der K Positionen des Zusammenwirkens ausgehend von den in Schritt c) gewonnenen M Daten umfasst, und dass das im Schritt g) angewendete Identifizierungskriterium ferner ox umfasst.

4. Verfahren nach einem der Ansprüche 1 bis 3, **dadurch gekennzeichnet, dass** der Dateninhalt X skalar ist und dass das Identifizierungskriterium, das bei dem Schritt g) angewendet wird, der Mahalanobis-Abstand zwischen dem aktuellen Dateninhalt und E[X] ist.

5. Verfahren nach einem der Ansprüche 1 bis 4, **dadurch gekennzeichnet, dass** der Schritt e) ausgeführt wird, indem das Werkzeug (1) Q-Mal in einer vorbestimmten Reihenfolge in den K Positionen des Zusammenwirkens angeordnet wird, wobei Q eine natürliche ganze Zahl ist, die größer als oder gleich M ist, und dadurch, dass die Schritte c) und f) gleichzeitig ausgeführt werden, wobei die Dateninhalte, die bei dem Schritt c) erfasst werden, aus den aktuellen Dateninhalten hervorgegangen sind, die bei dem Schritt f) erfasst werden.

6. Verfahren nach einem der Ansprüche 1 bis 4, **dadurch gekennzeichnet, dass** der Schritt c) ausgeführt wird, indem das Werkzeug (1) ein einziges Mal nacheinander in den K Positionen des Zusammenwirkens angeordnet wird und dadurch, dass der Schritt c) dem Schritt e) vorangeht.

7. Verfahren nach einem der Ansprüche 1 bis 6 in Kombination mit Anspruch 1, **dadurch gekennzeichnet, dass** der Schritt b) mit N festen Empfängern (20, 21, 22, 23) in der Umgebung ausgeführt wird, wobei N eine natürliche ganze Zahl ist, die größer als oder gleich 1 ist.

8. Verfahren nach einem der Ansprüche 3 bis 6, **dadurch gekennzeichnet, dass** der Schritt b) mit N festen Sendern-Empfängern (40, 41, 42, 43) in der Umgebung ausgeführt wird, wobei N eine natürliche ganze Zahl ist, die größer als oder gleich 1 ist.

9. Verfahren nach einem der Ansprüche 1 bis 6 in Kombination mit Anspruch 1, **dadurch gekennzeichnet, dass** der Schritt b) mit einem einzigen beweglichen Empfänger (20) in der Umgebung zwischen N vorbestimmten Positionen gemäß den K Positionen des Zusammenwirkens ausgeführt wird, wobei N eine natürliche ganze Zahl ist, die größer als oder gleich 2 ist.

10. Verfahren nach einem der Ansprüche 3 bis 6, **dadurch gekennzeichnet, dass** der Schritt b) mit einem einzigen beweglichen Sender-Empfänger in der Umgebung zwischen N vorbestimmten Positionen gemäß den K Positionen des Zusammenwirkens ausgeführt wird, wobei N eine natürliche ganze Zahl ist, die größer als oder gleich 2 ist.

**11.** Verfahren nach einem der Ansprüche 1 bis 10, **dadurch gekennzeichnet, dass** der Schritt f) ausgeführt wird, indem der aktuelle Dateninhalt M'-Mal erfasst wird, wobei M' eine natürliche ganze Zahl ist, die vorzugsweise streng kleiner als M ist.

**12.** Verfahren nach dem vorhergehenden Anspruch, **dadurch gekennzeichnet, dass** der aktuelle Dateninhalt eine mit X' bezeichnete Zufallsvariable bildet, und dadurch, dass der Schritt f) einen Schritt des Errechnens des mit E[X'] bezeichneten Erwartungswerts ausgehend von den erworbenen M' aktuellen Dateninhalten aufweist, und dadurch, dass das Identifizierungskriterium bei dem Schritt g) ausgehend von E[X'] angewendet wird.

**13.** Verfahren nach Anspruch 11, **dadurch gekennzeichnet, dass** das Identifizierungskriterium bei dem Schritt g) ausgehend von jedem der M' aktuellen Dateninhalte angewendet wird und dadurch, dass die aktuelle Position als die Position des Zusammenwirkens identifiziert wird, die nach dem Schritt g) hauptsächlich identifiziert wird.

**14.** Verfahren nach einem der Ansprüche 1 bis 13, **dadurch gekennzeichnet, dass** die K Verbindungspunkte in der Umgebung fest sind.

**15.** Verfahren nach einem der Ansprüche 1 bis 13, **dadurch gekennzeichnet, dass** der Schritt c) ausgeführt wird, indem das Werkzeug (1) in den K Positionen des Zusammenwirkens reproduzierbar angeordnet wird.

**Claims**

**1.** A method of identifying the position of a set of K assembly points in an environment, K being a natural number greater than or equal to 2, the method comprising the steps of:

a) providing a tool (1) configured to cooperate with each assembly point of the set in a so-called cooperation position, the tool (1) being equipped with a transmitter (10) of a signal of Ultra Wide Band type;
b) arranging at least one receiver (20, 21, 22, 23) in the environment to receive said signal for each of the K cooperation positions, the signal propagating in a propagation channel between the transmitter (10) and the at least one receiver (20, 21, 22, 23), the receiver or each receiver (20, 21, 22, 23) being configured to deliver data $(X_1, X_2, X_3, X_4)$ representative of the corresponding cooperation position, said data forming a random variable comprising all or part of the pulse response of the corresponding propagation channel, noted X;
c) acquiring at least M times the data $(X_1, X_2, X_3, X_4)$ delivered by the receiver or each receiver (20, 21, 22, 23) for each of the K cooperation positions, where M is a natural number greater than a predetermined value;
d) calculating the expectation of X, noted E[X], for each of the K cooperation positions based on the M pieces of data acquired at step c) for each receiver (20, 21, 22, 23);
e) arranging the tool (1) in a cooperation position, called current position;
f) acquiring at least one piece of data, called current data, delivered by the receiver or each receiver (20, 21, 22, 23) for the current position;
g) applying an identification criterion comprising E[X] based on the current data to identify the current position from among the K cooperation positions **characterized in that** the data X is vectorial:

- the identification criterion applied at step g) is selected from the group comprising the scalar product and the vectorial product, between the current data and E[X] when the pulse response has complex values, or
- the identification criterion applied at step g) is the coefficient of intercorrelation between the current data and E[X] when the pulse response has complex values, or **in that**.

when the data $(X_1, X_2, X_3, X_4)$ delivered at step b) is scalar and comprises information representative of the distance between the tool (1) in the corresponding cooperation position and the at least one corresponding receiver (20, 21, 22, 23) in the environment, said information being extracted from the pulse response of the corresponding propagation channel, step d) comprises a step d1) of calculating the standard deviation of X, noted $\sigma_X$, for each of the K cooperation positions based on the M pieces of data acquired at step c), and **in that** the identification criterion applied at step g) further comprises $\sigma_X$.

**2.** A method of identifying the position of a set of K assembly points in an environment, K being a natural number greater than or equal to 2, the method comprising the steps of:

a) providing a tool (1) configured to cooperate with each assembly point of the set in a so-called cooperation position, the tool (1) being equipped with a receiver (20) of a signal of Ultra Wide Band type;

b) arranging at least one transmitter (10, 11, 12, 13) in the environment to transmit said signal for each of the K cooperation positions, the signal propagating in a propagation channel between the at least one transmitter (10, 11, 12, 13) and the receiver (20), the receiver (20) of the tool (1) being configured to deliver data ($X_1$, $X_2$, $X_3$, $X_4$) representative of the corresponding cooperation position comprising all or part of the pulse response of the corresponding propagation channel, said data forming a random variable noted X,

c) acquiring at least M times the data ($X_1$, $X_2$, $X_3$, $X_4$) delivered by the receiver (20) for each of the K cooperation positions, where M is a natural number greater than a predetermined value;

d) calculating the expectation of X, noted E[X], for each of the K cooperation positions based on the M pieces of data acquired at step c);

e) arranging the tool (1) in a cooperation position, called current position;

f) acquiring at least one piece of data, called current data, delivered by the receiver (20) for the current position;

g) applying an identification criterion comprising E[X] based on the current data to identify the current position from among the K cooperation positions. **characterized in that** when data X is vectorial:

- the identification criterion applied at step g) is selected from the group comprising the scalar product and the vectorial product, between the current data and E[X] when the pulse response has complex values, or
- the identification criterion applied at step g) is the coefficient of intercorrelation between the current data and E[X] when the pulse response has complex values, or **in that**.

when the data ($X_1$, $X_2$, $X_3$, $X_4$) delivered at step b) is scalar and comprises information representative of the distance between the tool (1) in the corresponding cooperation position and the at least one corresponding transmitter (10, 11, 12, 13) in the environment, said information being extracted from the pulse response of the corresponding propagation channel, step d) comprises a step d1) of calculating the standard deviation of X, noted $\sigma_X$, for each of the K cooperation positions based on the M pieces of data acquired at step c), and **in that** the identification criterion applied at step g) further comprises $\sigma_X$.

3.  A method of identifying the position of a set of K assembly points in an environment, K being a natural number greater than or equal to 2, the method comprising the steps of:

a) providing a tool (1) configured to cooperate with each assembly point of the set in a so-called cooperation position, the tool (1) being equipped with a transceiver (4) of a signal of Ultra Wide Band type;

b) arranging at least one transceiver (40, 41, 42, 43) in the environment to transmit and receive said signal for each of the K cooperation positions, the signal propagating in a propagation channel between the transceiver (4) of the tool (1) and the at least one transceiver (40, 41, 42, 43) of the environment, the transceiver (4) of the tool (1) and each transceiver (40, 41, 42, 43) of the environment being configured to deliver data ($X_1$, $X_2$, $X_3$, $X_4$) representative of the corresponding cooperation position comprising all or part of the pulse response of the corresponding propagation channel, said data forming a random variable noted X,

c) acquiring at least M times the data ($X_1$, $X_2$, $X_3$, $X_4$) delivered by the transceiver (4) of the tool (1) and each transceiver (40, 41, 42, 43) of the environment for each of the K cooperation positions, where M is a natural number greater than a predetermined value,

d) calculating the expectation of X, noted E[X], for each of the K cooperation positions based on the M pieces of data acquired during step c);

e) arranging the tool (1) in a cooperation position, called current position;

f) acquiring at least one piece of data, called current data, provided by the transceiver (4) of the tool (1) and each transceiver (40, 41, 42, 43) of the environment for the current position;

g) applying an identification criterion comprising E[X] based on the current data to identify the current position from among the K cooperation positions **characterized in that** when data X is vectorial:

- the identification criterion applied at step g) is selected from the group comprising the scalar product and the vectorial product, between the current data and E[X] when the pulse response has complex values, or
- the identification criterion applied at step g) is the coefficient of intercorrelation between the current data and E[X] when the pulse response has complex values, or **in that**.

when the data ($X_1$, $X_2$, $X_3$, $X_4$) delivered at step b) is scalar and comprises information representative of the distance between the tool (1) in the corresponding cooperation position and the at least one corresponding transceiver (40, 41, 42, 43) in the environment, said information being extracted from the pulse response of the corresponding propagation channel, step d) comprises a step d1) of calculating the standard deviation of X,

noted $\sigma_X$, for each of the K cooperation positions based on the M pieces of data acquired at step c), and **in that** the identification criterion applied at step g) further comprises $\sigma_X$

4. The method according to one of claims 1 to 3, **characterized in that** the data is scalar and the identification criterion applied at step g) is the Mahalanobis distance between the current data and E[X].

5. The method according to one of claims 1 to 4, **characterized in that** step e) is executed by arranging the tool (1) Q times in the K cooperation positions according to a predetermined order, where Q is a natural number greater than or equal to M, and **in that** steps c) and f) are simultaneous, the data acquired at step c) originating from the current data acquired at step f).

6. The method according to one of claims 1 to 4, **characterized in that** step c) is executed by arranging the tool (1) a single time successively in the K cooperation positions, and **in that** step c) is prior to step e).

7. The method according to one of claims 1 to 6 in combination with claim 1, **characterized in that** step b) is executed with N receivers (20, 21, 22, 23) mounted stationary in the environment, N being a natural number greater than or equal to 1.

8. The method according to one of claims 3 to 6, **characterized in that** step b) is executed with N fixed transceiver (20, 21, 22, 23) mounted stationary in the environment, N being a natural number greater than or equal to 1.

9. The method according to one of claims 1 to 6 in combination with claim 1, **characterized in that** step b) is executed with a single receiver (20) mobile in the environment between N predetermined positions according to the K cooperation positions, N being a natural number greater than or equal to 2.

10. The method according to one of claims 3 to 6 **characterized in that** step b) is executed with a single transceiver mobile in the environment between N predetermined positions according to the K cooperation positions, N being a natural number greater than or equal to 2.

11. The method according to one of claims 1 to 10 **characterized in that** step f) is executed by acquiring M' times the current data, where M' is a natural number strictly lower than M.

12. The method according to preceding claim, **characterized in that** the current data form a random variable, noted X', **in that** step f) comprises a step of calculating the expectation of X', noted E[X'], based on the M' acquired pieces of current data, and **in that** the identification criterion is applied from E[X'] at step g).

13. The method according to claim 11, **characterized in that** the identification criterion is applied from each of the M' current data at step g), and **in that** the current position is identified as the cooperation position predominantly identified after step g).

14. The method according to one of claims 1 to 13 **characterized in that** the K assembly points are stationary in the environment.

15. The method according to one of claims 1 to 13 **characterized in that** step c) is executed by reproducibly arranging the tool in the K cooperation positions.

Fig. 1

Fig. 2

*Fig. 3*

*Fig. 4a*

*Fig. 4b*

**Fig. 5**

**Fig. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2138861 A
- US 20070010956 A